# EUROPÄISCHE PATENTSCHRIFT

(11) **EP 2 881 858 B1**
(45) Veröffentlichungstag und Bekanntmachung des Hinweises auf die Patenterteilung: **06.04.2016**
(21) Anmeldenummer: 13196209.4
(22) Anmeldetag: 09.12.2013
(51) Int. Cl.: G06F 9/445

(54) **Verfahren zur Änderung der Software im Speicher eines elektronischen Steuergerätes**
Method for modifying the software in the memory of an electronic control device
Procédé de modification du logiciel dans la mémoire d'un appareil de commande électronique

(43) Veröffentlichungstag der Anmeldung: 10.06.2015
(73) Patentinhaber: dSPACE digital signal processing and control engineering GmbH, 33102 Paderborn (DE)
(72) Erfinder: Dressler, Marc, 32805 Horn-Bad Meinberg (DE); Hufnagel, Thorsten, 33154 Salzkotten (DE); Kellers, Bastian, 33100 Paderborn (DE)

(56) Entgegenhaltungen:
- US-A1- 2008 148 250
- DATABASE INSPEC [Online] THE INSTITUTION OF ELECTRICAL ENGINEERS, STEVENAGE, GB; April 1983 (1983-04), WEISS L: "Microcode patch facility", XP002722088, Database accession no. 2091255 & IBM TECHNICAL DISCLOSURE BULLETIN USA, Bd. 25, Nr. 11A, April 1983 (1983-04), Seiten 5624-5625, ISSN: 0018-8689
- JANGHOON LYU ET AL: "A procedure-based dynamic software update", PROCEEDINGS INTERNATIONAL CONFERENCE ON DEPENDABLE SYSTEMS AND NETWORKS. DSN 2001. G TEBORG, SWEDEN, JULY 1 - 4, 2001; [INTERNATIONAL CONFERENCE ON DEPENDABLE SYSTEMS AND NETWORKS], LOS ALAMITOS, CA : IEEE COMP. SOC, US, 1. Januar 2001 (2001-01-01), Seiten 271-280, XP031172817, DOI: 10.1109/DSN.2001.941412 ISBN: 978-0-7695-1101-6

## Beschreibung

Die Erfindung betrifft ein Verfahren zur Änderung der Software im Speicher eines elektronischen Steuergerätes, wobei der Speicher zumindest einen Festspeicher umfasst mit darin gespeicherten und zumindest einen Teil der Software bildenden mehreren ursprünglichen Programmroutinen, die durch wenigstens einen Prozessor des Steuergerätes abgearbeitet werden und der weiterhin zumindest einen Arbeitsspeicher zur Speicherung flüchtiger Daten aufweist, wobei auf dem Steuergerät eine Bypassroutine abgespeichert wird, die zusätzlich oder anstatt wenigstens einer ursprünglichen Programmroutine abgearbeitet wird, was dadurch erfolgt, dass im Ablauf der Abarbeitung von Programmschritten durch den Prozessor zumindest vor dem Ende der ursprünglichen Programmroutine der Aufruf einer Service-Funktion erfolgt, welcher als Argument ein Zeiger auf eine Position in einer gespeicherten Tabelle übergeben wird und bei einem bestehenden Eintrag in der Tabelle an dieser Position die Bypassroutine an der durch den Eintrag gebildeten Adresse aufgerufen und bei einem nicht bestehenden Eintrag die Service-Funktion ohne Aufruf der Bypassroutine beendet wird.

In der Automobilbranche ermöglicht der Einsatz von Software Kontroll- und Regelungsmechanismen mit einem Grad an Effizienz, wie er durch rein mechanische Lösungen nicht zu verwirklichen wäre. Moderne Autos beinhalten daher ein Netzwerk aus elektronischen Steuergeräten (ECUs, Electronic Control Units) mit jeweils mindestens einem Prozessor, der Programmroutinen abarbeitet, einem Arbeitsspeicher und einem Festspeicher, wobei letzterer beispielsweise durch einen Flash-Speicher verwirklicht sein kann.

Alle Steuergeräte verfügen zudem über Schnittstellen, mittels derer sie Sensordaten aufnehmen, Aktoren ansteuern und miteinander kommunizieren. Wie in der Software-industrie allgemein üblich, wird auch bei der ECU-Programmierung gerne auf bestehende Lösungen zurückgegriffen.

Als Basis für die Entwicklung eines neuen Steuergerätes dient dann ein bereits bestehendes, z.B. ein Motorsteuergerät für einen Motor aus einer Vorgängerserie. Dann werden selektiv einzelne Funktionen modifiziert oder neu entwickelt, während der größte Teil des alten Codes erhalten bleibt. Alternativ geben Hersteller oft bei Zulieferern vollständig programmierte Entwicklungssteuergeräte in Auftrag, um diese dann selbst gemäß den eigenen, spezifischen Anforderungen zu modifizieren. Beiden Szenarien ist gemein, dass die neu entwickelten Funktionen in den lauffähigen Binärcode des Steuergerätes eingebunden werden und dort die jeweilige Originalfunktion ersetzen müssen. Diesen Einbindungsvorgang bezeichnet man als Bypassing. Das Lehrbuch "Handbuch Kraftfahrzeugelektronik" von Henning Wallentowitz und Konrad Reif (ATZ/MTZ-Fachbuch, 2. Auflage, 2011) beschreibt den aktuellen Stand der Technik bezüglich des Bypassings an Steuergeräten.

Zur Implementierung eines Funktionsbypasses wird z.B. auf das servicebasierte Bypassing zurückgegriffen. Eine Service-Funktion ist eine spezielle, auf dem Speicher des Steuergerätes liegende Funktion. An bestimmten Stellen im Programmcode wird sie aufgerufen und übernimmt die technische Durchführung des Bypasses, indem sie zusätzlich zur oder anstelle der Originalfunktion die Bypassroutine aufruft, deren Eingangsgrößen zur Verfügung stellt und nach deren Durchlauf dafür sorgt, dass von der Bypassroutine geschriebene Werte an den richtigen Stellen im Steuergeräte-Speicher abgelegt werden.

Grundsätzlich kann eine Bypassroutine entweder auf einem externen System oder auf dem Steuergerät selbst liegen. Letztere Möglichkeit, das sogenannte interne Bypassing, kommt dabei mit weniger zusätzlicher Hardware aus und ist nicht auf das Vorhandensein spezieller Schnittstellen angewiesen.

Ein Entwicklungssteuergerät muss in der Regel für die Durchführung eines Funktionsbypasses vorbereitet werden. Bei Anwendung eines servicebasierten Bypassing-Verfahrens bedeutet das, dass vor und/oder nach oder in der zu ersetzenden Funktion ein Aufruf der Servicefunktion in den Binärcode integriert sein muss.

Im Idealfall werden diese Servicefunktionsaufrufe schon auf Quellcodeebene implementiert. In der Praxis ist das nicht immer umsetzbar, weshalb in einem weiteren Verfahren die Integration der Servicefunktionsaufrufe direkt im Binärcode der originalen ECU-Applikation erfolgt.

Das Aufspielen von neuem Bypasscode bedingt nach aktuellem Stand der Technik jeweils ein komplett neues Programmieren des Flash-Speichers des Steuergeräts. Das ist nicht nur zeitaufwendig und unterbricht laufende Testreihen, sondern strapaziert auch den Flash-Speicher, der physisch nur eine begrenzte Anzahl an Speichervorgängen verkraften kann.

Ein weiteres Problem ist, dass viele Steuergeräte Validitätsprüfungen durchführen. Um sicherzustellen, dass ihr Programmcode nicht korrumpiert ist, erstellen sie eine Prüfsumme ihres Speicherinhalts und arbeiten nur dann uneingeschränkt weiter, wenn deren Wert korrekt ist. Das Aufspielen von internem Bypass-Code ist auf solchen Geräten nur möglich, wenn die Prüfsumme aktualisiert wird. Dies ist einem Anwender jedoch nicht in jedem Szenario möglich.

In einem typischen, dem Stand der Technik entsprechenden Szenario für servicebasiertes internes Bypassing liegt zusätzlich zur eigentlichen Programmroutine, eine spezielle Bypass-Service-Funktion auf dem Flash. Eine beliebige Programmfunktion f, die für einen Bypass präpariert ist, ist um zwei Aufrufe der Servicefunktion erweitert.

Der Anwender installiert, z.B. mittels einer speziellen Software, eine Bypassroutine auf dem Flash, und die Software trägt die Speicheradresse der Bypassroutine in einer Tabelle ein. Der erste Aufruf der Service-Funktion befindet sich z.B. unmittelbar vor der zu ersetzenden Programmroutine. Die Service-Funktion erhält als Argument einen Index für einen ersten Tabelleneintrag. Findet sie dort eine Speicheradresse vor,

so ruft sie die Bypassroutine auf, die sich an dieser Adresse befindet. Ansonsten bleibt sie passiv.

Die Tabelle kann die Speicheradressen von Bypassroutinen unmittelbar enthalten oder diese indirekt vermitteln, beispielsweise, indem sie Identifikationsnummern enthält, die sich auf dem System installierten Bypassroutinen eindeutig zuordnen lassen. Letzteres ist vor allem dann bevorzugt, wenn eine oder mehrere Bypassroutinen auf externen, durch den Prozessor des Steuergerätes nicht adressierbaren Speichermedien gespeichert sind.

Die Bypassroutine, sofern sie ausgeführt wird, schreibt alle von ihr produzierten Werte in einen Zwischenspeicher. Nach Abarbeitung der Bypassroutine springt der Prozessor wieder zurück in die eigentliche Programmroutine. Diese läuft dann ordnungsgemäß bis zum Ende durch, unabhängig davon, ob eine Bypass-Funktion ausgeführt wurde oder nicht.

Nach Durchlauf der Programmroutine erfolgt ein zweiter Aufruf der Service-Funktion. Als Argument erhält sie einen Index für einen zweiten Tabelleneintrag und findet dort die Adresse einer Überschreibungsroutine. Diese ist auf die Bypassroutine abgestimmt und wurde mit ihr zusammen installiert. Die Überschreibungsroutine liest die Ergebnisse der Bypassroutine aus dem Zwischenspeicher aus und überschreibt damit die von der zu ersetzenden Programmroutine geschriebenen Variablen.

Die Informationen über die von der Programmroutine verarbeiteten Variablen stammen z.B. aus der a2I-Datei des Steuergeräts. Das ist eine technische Beschreibungsdatei, die jedem Entwicklungssteuergerät beiliegt. Sie enthält unter anderem einen Block, der den auf dem Steuergerät laufenden Routinen ihre jeweils gelesenen und geschriebenen Variablen zuordnet, sowie einen zweiten Block, der die Speicheradressen der Variablen nennt. Die Kenntnis des Quellcodes der Programmroutinen ist für den Entwurf einer Bypass-Funktion deshalb nicht notwendig.

Aufgabe der Erfindung ist es, eine Ersetzung einer vorhandenen Programmroutine zu ermöglichen, ohne eine komplette Neuprogrammierung des Flashspeichers zu erfordern, diesen also auch nicht zu belasten, insbesondere eine Ersetzung jederzeit, insbesondere auch zur Laufzeit zu ermöglichen. Bevorzugt soll eine Änderung der Prüfsumme entbehrlich sein und ein schnellerer Ladevorgang möglich sein, bevorzugt ohne das Steuergerät anzuhalten oder auszuschalten. Unter der Ersetzung wird zumindest ein funktionelles Ersetzen verstanden, nicht zwingend ein physisches Ersetzen des vorhandenen Codes der ursprünglichen Programmroutine.

Das erfindungsgemäße Verfahren sieht zur Lösung dieser Aufgabe vor, dass die Bypassroutine, insbesondere über eine Schnittstelle des Steuergerätes mittels eines an der Schnittstelle angeschlossenen Rechners, in einen außerhalb des Festspeichers liegenden Bereich des Speichers, insbesondere in den flüchtigen Arbeitsspeicher, übertragen wird und in der Tabelle an der durch den Zeiger bestimmten Position die Adresse der Bypassroutine eingetragen wird, an welcher die Bypassroutine beginnt.

Durch das Schreiben einer Bypassroutine in einen Speicherbereich außerhalb des Festspeichers, also außerhalb des Flash-Speichers, wird sichergestellt, dass der Flash-Speicher nicht belastet wird, also keine Schreibzyklen erfährt, welche die Lebensdauer herabsetzen.

Es besteht dabei weiterhin die Möglichkeit und ist bevorzugt vorgesehen, dass ein jeweiliger Service-Funktionsaufruf bereits vom Zulieferer vorsorglich implementiert wurde und nicht durch den Anwender nachträglich in den Programmcode integriert werden muss, so dass auch das Problem der zyklischen Validitätsprüfung entfällt, denn diese bezieht sich allein auf den Flash.

Der wesentliche Vorteil der Erfindung ist es, dass eine Bypassroutine für die Ersetzung einer ursprünglichen Programmroutine verwendet werden kann, ohne das Steuergerät anzuhalten. Bevorzugt kann somit das Speichern der Bypassroutine also auch zur Laufzeit der Abarbeitung der Software durch den Prozessor erfolgen, insbesondere, wenn das Speichern der Bypassroutine in den Arbeitsspeicher erfolgt.

Ist noch keine (vorherige) Bypassroutine gespeichert gewesen, so wird durch den Anwender, bzw. die eingesetzte Software erfindungsgemäß in die Tabelle nach dem erstmaligen Speichern einer Bypassroutine außerhalb des Flashs, z.B. im Arbeitsspeicher, an der bis dahin leeren Tabellenposition, auf welche der Zeiger verweist, die Adresse der Bypassroutine gespeichert. Sofern auch neben der Bypassroutine eine Überschreibungsroutine gemäß den vorherigen Ausführungen vorgesehen ist, erfolgt dies genauso für die bis dahin leere Tabellenposition, auf welche der Zeiger verweist, welcher der Service-Funktion zum Aufruf dieser Überschreibungsroutine als Argument übergeben wird.

Ist hingegen schon eine Bypassroutine und/oder Überschreibungsroutine implementiert, also die jeweilige Tabellenposition durch einen Eintrag der jeweiligen Adresse belegt, so kann es in einer Weiterbildung der Erfindung vorgesehen sein, dass vor dem Ersetzen einer bestehenden Bypassroutine durch eine neue Bypassroutine, ein bestehender Eintrag an der durch den Zeiger bestimmten Position der Tabelle gelöscht und/oder deaktiviert wird und die Ersetzung in einem Zeitraum erfolgt, wenn der Prozessor die bestehende Bypassroutine nicht abarbeitet. In analoger Weise wird vorgegangen, wenn auch eine bestehende Überschreibungsroutine ersetzt werden soll, deren Ersetzung dann auch erfolgt, wenn die bestehende Überschreibungsroutine nicht abgearbeitet wird.

In diesem Fall werden also vor dem Austausch beide Tabelleneinträge gelöscht und/oder deaktiviert, die die Adressen von Bypassroutine und Überschreibungsroutine beinhalten. Der Servicefunktionsaufruf wird sodann bei allen folgenden Programmzyklen jeweils einen leeren Eintrag vorfinden und passiv bleiben, d.h. der Steuergerätecode läuft mit der ursprünglichen Programmroutine durch.

Die Bypassroutine kann sodann zeitlich unkritisch, d.h. gefahrlos gelöscht und durch eine neue Bypassroutine ersetzt werden. Ebenso gilt dies für eine evtl. Überschreibungsroutine. Sobald der Bypassroutinen-Code vollständig in den Arbeitsspeicher geschrieben ist, wird die Adresse des Arbeitsspeichers, an denen die Bypassroutine beginnt in die Tabelle eingetragen, an der Position, die durch den Zeiger bestimmt ist, welcher der Servicefunktion als Argument übergeben wird. Gleiches erfolgt für eine Überschreibungsroutine in analoger Weise, sofern eine solche Überschreibungsroutine vorgesehen ist.

Alternativ kann die Löschung der alten Bypassroutine auch ausbleiben. Eine neue Bypassroutine, welche die alte dann zumindest funktionell ersetzt, kann auch zusätzlich zu der alten in einem noch freien Bereich des Arbeitsspeichers installiert werden. In analoger Weise gilt dies wiederum auch für die Überschreibungsroutine. Die Tabelleneinträge werden nach vollständiger Installation dann entsprechend der jeweils neuen gültigen Adresse abgeändert.

Eine erfindungsgemäß bevorzugte Weiterbildung kann vorsehen, dass sichergestellt wird, dass auf eine bestehende Bypassroutine erst dann zugegriffen wird, wenn sie nicht mehr ausgeführt wird. Eine Löschung oder Manipulation von einer gerade ausgeführten Routine zöge eine Fehlfunktion des Steuergeräts mit möglicherweise schweren Folgen mit sich, bis hin zur Zerstörung des Testfahrzeugs bzw. des Prüfstands.

Um dies sicherzustellen kann eine erste mögliche Ausführung des Verfahren vorsehen, dass einer Bypassroutine, insbesondere jeder Bypassroutine, ein jeweiliges Statusregister zugeordnet ist, das bei Ausführung der zugeordneten Bypassroutine gesetzt wird und ansonsten gelöscht ist, wobei die Ersetzung nur erfolgt, wenn ein bestehender Eintrag in der Tabelle gelöscht und gleichzeitig das Statusregister der zu ersetzenden Bypassroutine gelöscht ist.

Eine andere Ausführung kann vorsehen, dass bei jedem Aufruf einer Bypassroutine, insbesondere durch die Service-Funktion, ein Zähler inkrementiert und bei Beendigung einer Bypass-Routine derselbe Zähler dekrementiert wird und die Ersetzung nur erfolgt, wenn ein bestehender Eintrag in der Tabelle gelöscht und gleichzeitig der Zähler Null ist. Diese Ausführung ist bevorzugt, wenn auf dem Steuergerät möglicherweise mehrere sich gegenseitig unterbrechende oder parallel abgearbeitete Prozesse zur Ausführung kommen, optional mit unterschiedlicher Priorität, sodass eine Unterbrechung innerhalb nebst der erneuten Ausführung derselben oder einer alternativen Bypassroutine bzw. eine mehrfache Bearbeitung ein und derselben oder mehrerer Bypassroutinen zur gleichen Zeit möglich ist. Ein Zählerwert von Null bedeutet dann, dass keiner der zu einem bestimmten Zeitpunkt laufenden Prozesse eine bestimmte bzw. in einer weiteren Ausbaustufe eine der vorhandenen Bypassroutinen aktuell ausführt. Es kann vorgesehen sein, sowohl ein Statusregister als auch einen Zähler nicht nur bzgl. Bypassroutinen, sondern auch bzgl. Überschreibungsroutinen vorzusehen, sofern es solche in Verbindung mit Bypassroutinen gibt. So wird dann sichergestellt, dass der Prozessor weder eine Bypassroutine noch eine Überschreibungsroutine zum Zeitpunkt einer Ersetzung einer oder beider Routinen ausführt.

Es kann weiterhin vorgesehen sein, ein Statusregister und einen Zähler für alle Bypass- und Überschreibungsroutinen vorzusehen. So wird dann sichergestellt, dass der Prozessor keine der vorhandenen Bypassroutinen oder Überschreibungsroutinen ausführt.

Die Erfindung bzgl. beider beschriebener Varianten kann vorsehen, dass durch eine Software auf dem über die Schnittstelle verbundenen Rechner der Tabelleneintrag gelöscht, der Zähler und/oder das Register abgefragt wird und in Abhängigkeit des Zählerstandes und/oder Registerstandes ein Neueintrag in die Tabelle erfolgt.

Die Service-Funktions-Aufrufe, die das Aufrufen einer Bypassroutine bewirken, werden bevorzugt schon vorbereitend auf Quellcode-Ebene in den Steuergerätecode implementiert.

Ist dies hingegen nicht ursprünglich erfolgt und soll dennoch eine ursprüngliche Programmroutine durch eine Bypassroutine ersetzt werden, so kann eine Weiterbildung der Erfindung vorsehen, dass ein Service-Funktions-Aufruf nachträglich in den Programmcode des Steuergerätes implementiert wird.

Erfindungsgemäß kann es zur Implementation eines ursprünglich im Festspeicher zu einer Programmroutine nicht vorhandenen Service-Funktionsaufrufes in einer ersten möglichen Ausführung demnach vorgesehen sein, dass zumindest ein Teil derjenigen Programmroutine, zu der eine Bypassroutine gespeichert werden soll, aus dem ursprünglichen Speicherbereich des Festspeichers herausverlagert wird in einen anderen Speicherbereich, insbesondere einen anderen Bereich desselben Festspeichers, und Programmverzweigungen vorgesehen werden zwischen wenigstens einem im ursprünglichen Speicherbereich verbliebenen Teil der Programmroutine und einem herausverlagerten Teil der Programmroutine, wobei wenigstens ein Service-Funktionsaufruf im Bereich des ursprünglichen und durch die Verlagerung frei gewordenen Speicherbereichs anschließend an einen verbliebenen Programmroutinenteil gespeichert wird oder anschließend an einen herausverlagerten Programmroutinenteil gespeichert wird. Das Anschließen an einen herausverlagerten Programmroutinenteil kann dabei sowohl an dessen Anfang als auch an dessen Ende erfolgen.

Die genannte Programmverzweigung, kann z.B. durch Sprungbefehle erfolgen, die den Prozessor veranlassen die Abarbeitung an der Adresse fortzusetzen, die im Sprungbefehl angegeben ist und auf die Adresse verweist, wo der herausverlagerte Programmroutinenteil, bzw. ein diesem vorgelagerter Service-Funktionsaufruf gespeichert ist.

Im Zusammenhang mit einer Herausverlagerung kann es weiterhin vorgesehen sein, dass der zum Herausverlagern vorgesehene Teil der Programmroutine auf Adressangaben überprüft wird und die Adressangaben entweder vor oder nach der Herausverlagerung angepasst werden oder nur ein solcher Programmroutinenteil herausverlagert wird, der keine Adressangaben enthält, die einer Anpassung bedürfen. Eine Anpassung von Adressangaben kann beispielsweise derart erfolgen, dass absolute Adressangaben, die sich auf eine Adresse innerhalb des zum Herausverlagern vorgesehenen Teils der Programmroutine beziehen, derart angepasst werden, dass sie nach dem Herausverlagern auf den gleichen Wert bzw. den gleichen Befehl innerhalb der herausverlagerten Programmroutine verweisen. Umgekehrt kann eine Anpassung auch derart erfolgen, dass relative Adressangaben, die sich auf eine Adresse außerhalb des zum Herausverlagern vorgesehenen Teils der Programmroutine beziehen, derart angepasst werden, dass sie nach dem Herausverlagern auf den gleichen Wert bzw. den gleichen Befehl außerhalb der herausverlagerten Programmroutine verweisen.

Erfolgt eine Herausverlagerung in einen Bereich des Flash-Speichers, so wird erfindungsgemäß derart vorgegangen, dass dieses außerhalb der Laufzeit des Steuergerätes erfolgt, in welcher der Prozessor die Software abarbeitet. Erfolgt jedoch die Herausverlagerung in einen Teil des Arbeitsspeichers, so kann auch dies zur Laufzeit erfolgen, wenn gleichzeitig sichergestellt ist, dass die Programmroutine, bei welcher eine Herausverlagerung eines Routinenteils erfolgen soll, gerade nicht durch den Prozessor abgearbeitet wird. Hierfür kann z.B. der Prozessorpointer, der auf den gerade bearbeiteten Speicherbereich zeigt, dahingehend überprüft werden, ob es sich um einen Speicherbereich der teilweise zu verlagernden Routine handelt.

Eine andere Möglichkeit der nachträglichen Implementation eines Service-FunktionsAufrufes kann vorsehen, dass zur Implementation eines ursprünglich im Festspeicher zu einer Programmroutine nicht vorhandenen Service-Funktionsaufrufes ein Overlay-Speicher des Steuergerätes genutzt wird, von dem eine Speicheradresse mittels einer Zuordnungsinformation einer Speicheradresse eines Programmroutinenbefehls der im Festspeicher zu ersetzenden Programmroutine zugeordnet wird, so dass der Prozessor statt des Programmroutinenbefehls an der Adresse im Festspeicher den Befehl an der zugeordneten Adresse des Overlay-Speichers abarbeitet und an der zugeordneten Adresse im Overlay-Speicher ein Sprungbefehl gespeichert wird, der den Prozessor veranlasst, die Programmabarbeitung ab einer Adresse im Arbeitsspeicher fortzusetzen, die durch den Sprungbefehl identifiziert wird, wobei in einem Speicherbereich des Arbeitsspeichers ab dieser Adresse wenigstens ein Service-Funktionsaufruf, eine Rekonstruktion des Programmroutinenbefehls und ein Sprungbefehl gespeichert ist, der in die ursprüngliche Programmroutine zurückführt.

Hier macht sich die Erfindung zunutze, dass es in Steuergeräten bekannter Bauart einen als Overlay-Speicher bezeichneten Speicherbereich geben kann und bei eingeschalteter Overlay-Funktion des Steuergerätes statt des Befehls an der Stelle einer Adresse im Festspeicher ein Befehl an einer Adresse im Overlay-Speicher ausgeführt wird, welche durch die Zuordnungsinformation der Adresse im Festspeicher zugeordnet ist.

Die Zuordnungsinformation kann durch die Inhalte von Prozessorregistern oder einer gespeicherten Tabelle gegeben sein.

Es wird sodann durch eine solche vorgenommene Zuordnung der an der Adresse im Festspeicher stehende Programmroutinenbefehl ignoriert und statt dessen der Sprungbefehl an der zugeordneten Adresse im Overlay-Speicher ausgeführt, welcher den Prozessor in den Arbeitsspeicher verzweigen lässt zu der durch den Sprungbefehl identifizierten Adresse. Im Bereich ab dieser Adresse befindet sich ein Service-Funktionsaufruf, der wie zuvor beschrieben die Abarbeitung einer Bypassroutine veranlasst, sowie eine Rekonstruktion des "überlagerten" Programmroutinenbefehls, so dass sichergestellt wird, dass auch alle ursprünglichen Befehle der zu ersetzenden Programmroutine ausgeführt werden. Der Service-Funktionsaufruf kann dabei vor oder hinter den rekonstruierten Programmroutinenbefehl geschrieben werden. Hiernach befindet sich ein Sprungbefehl, der in die ursprüngliche Programmroutine zurückführt, insbesondere zu der Adresse nach derjenigen, die überlagert wurde.

Eine Einfügung von Service-Funktionsaufrufen kann auf diese Art nicht nur einmalig, sondern auch mehrmalig vorgenommen werden, also z.B. auch zur Implementation eines Service-Funktionsaufrufes für eine ggfs. vorgesehene Überschreibungsroutine.

Diese Methode, einen Service-Funktionsaufruf durch die Überlagerung von wenigstens einer Speicheradresse im Festspeicher durch wenigstens eine zugeordnete Adresse im Overlay-Speicher zu integrieren hat den Vorteil, dass der Festspeicher in keiner Weise manipuliert werden muss, wie dies bei der zuvor beschriebenen Herausverlagerung von Programmroutinenteilen der Fall ist.

Bevorzugt kann eine Weiterbildung dieser Methode vorsehen, dass zunächst eine evtl. eingeschaltete Overlay-Funktionalität des Steuergerätes ausgeschaltet wird und im Anschluss daran in beliebiger Reihenfolge in den Overlay-Speicher der Sprungbefehl gespeichert wird und in den Arbeitsspeicher, auf den der Sprungbefehl verweist, der Service-Funktionsaufruf und die genannte Rekonstruktion des überlagerten Befehls integriert wird. Erst nachdem dies vorgenommen wurde, wird die Overlay-Funktionalität des Steuergerätes eingeschaltet.

Eine Ausführung der Erfindung kann auch vorsehen, dass die Bypassroutine in einen Speicherbereich außerhalb des Steuergerätes geschrieben wird. Z.B. kann es sich um den Speicher eines anderen Steuergerätes handeln oder um den Speicher eines Rechners, welcher ein anderes Steuergerät simuliert, insbesondere somit ein Rapid-Control-Prototyping-System. Weiterhin wird lediglich ein Service-Funktionsaufruf benötigt, der wie zuvor beschrieben schon herstellerseitig in eine zu ersetzende Programmroutine implementiert ist oder nachträglich durch eine der erfindungsgemäßen Ausführungen implementiert wird.

In diesem Fall verweist der Inhalt an der Position in der Tabelle, auf die das Argument der Service-Funktion zeigt, nicht auf einen steuergeräteinternen Speicher, sondern auf den externen Speicher, was das Steuergerät bzw. den Prozessor veranlassen kann an das Steuergerät des externen Speichers oder den simulierenden Rechner mit dem externen Speicher die für die Ausführung der Bypassroutine benötigten Daten zu übersenden und die dort gespeicherte Bypassroutine auszuführen. Diese Übersendung kann über Schnittstellen und Kommunikationswege zwischen den Steuergeräten bzw. Steuergerät und Simulationsrechner erfolgen. Ergebnisse der Bypassroutine werden sodann an das Steuergerät, welches den Service-Funktionsaufruf durchführte, durch Kommunikation zurückübertragen, insbesondere um mit diesem Ergebnis das Ergebnis der ursprünglichen Programmroutine zu überschreiben. Hierfür kann das zurückübertragene Ergebnis in eine Tabelle auf dem Steuergerät eingetragen werden und aus dieser durch die Service-Funktion, insbesondere diejenige, welche die Überschreibungsroutine auslöst, wieder ausgelesen werden um das Überschreiben durchzuführen.

Ausführungsmöglichkeiten der Erfindung werden nachfolgend anhand der Figuren beschrieben. Es zeigen:
- Fig. 1:: ein für einen Bypass präpariertes Entwicklungssteuergerät nach Stand der Technik.
- Fig. 2:: die Funktionalität einer Service-Funktion nach Stand der Technik.
- Fig. 3:: einen Ausschnitt aus einer fiktiven a2I-Datei.
- Fig. 4:: ein erfindungsgemäß für einen Bypass präpariertes Entwicklungssteuergerät.
- Fig. 5:: die Funktionalität einer erfindungsgemäßen Servicefunktion.
- Fig. 6:: die Funktionalität einer erfindungsgemäßen Servicefunktion in einer durch mehrfache Prozesse charakterisierten Umgebung.
- Fig. 7:: die nachträgliche Integration von Serviceaufrufen in den Maschinencode des Entwicklungssteuergeräts.
- Fig. 8:: die nachträgliche Integration von Serviceaufrufen in den Programmcode durch Nutzung eines Overlay-Speichers.

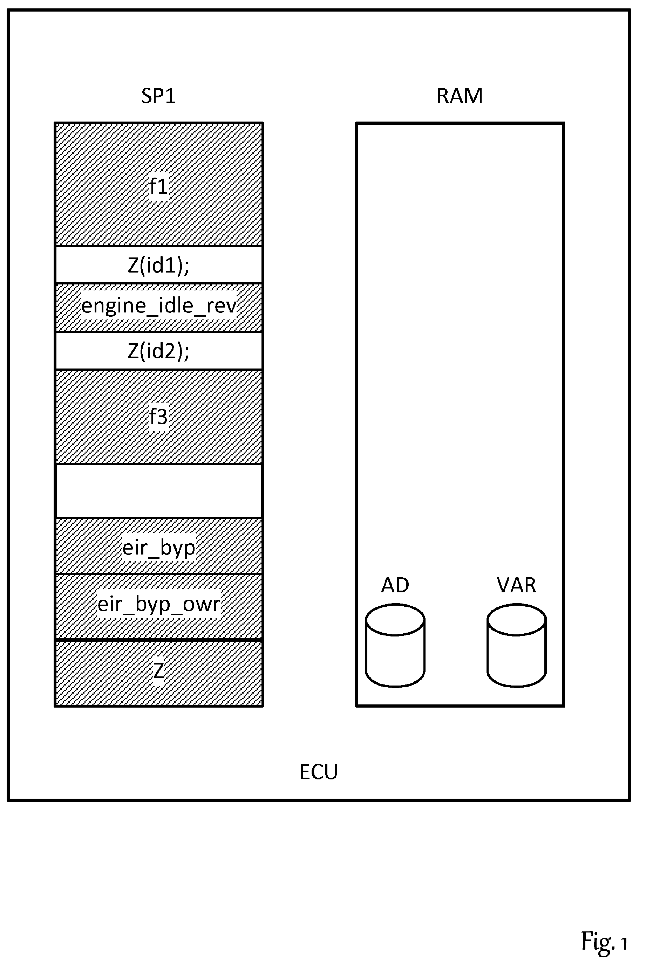

Fig. 1 veranschaulicht das grundsätzliche Prinzip des servicebasierten internen Funktionsbypassings. Ein Entwicklungssteuergerät ECU verfügt über einen Festspeicher SP1, in aller Regel ein Flash-Speicher, sowie einen Arbeitsspeicher RAM. Auf dem Festspeicher SP1 liegt ein in Maschinensprache kodiertes Programm mit mehreren Programmroutinen, hier beispielsweise umfassend die Routinen *f1, engine*_*idle*_*rev* und f3. Die Anzahl der Routinen ist hier aus Darstellungsgründen stark reduziert. Ein reales Steuergeräteprogramm besteht typischerweise aus einigen hundert einzelnen Routinen.

In einem beispielhaften realistischen Anwendungsbeispiel ist das Steuergerät ECU ein Motorsteuergerät und die Routine *engine*_*idle*_*rev* eine Routine zur Regulierung der Leerlaufdrehzahl. Zur Reduzierung des Treibstoffverbrauchs ist es sinnvoll, die Leerlaufdrehzahl des Motors möglichst niedrig zu halten. Mit anderen Worten: dicht an der Drehzahl, die gerade noch ausreicht, den Betrieb des Motors aufrecht zu erhalten.

Dieser Wert ist aber keine für jedes Motormodell festgelegte Konstante, sondern ein variabler, von vielen veränderlichen Faktoren bestimmter Wert. Dazu gehören neben dem Motormodell zum Beispiel der Ladestand der Batterie, die momentane Batterielast durch elektrische Verbraucher oder die Motortemperatur.

Entsprechend den vielen, schwer quantifizierbaren Einflussfaktoren besteht ein großes Optimierungspotential. Kein Programmierer einer Funktion zur Regelung der Leerlaufdrehzahl kann die Existenz einer besseren Lösung mit Sicherheit ausschließen.

In einem Szenario könnte ein Automobilhersteller, der bei einem Zulieferer ein Motorsteuergerät in Auftrag gibt, diesem mitteilen, dass er mehrere Funktionen zur Regulierung der Leerlaufdrehzahl ausprobieren möchte. In einem anderen Szenario möchte er vielleicht die Funktionalität des Steuergeräts erweitern. Beispielsweise könnte er sein Automodell mit einer Abschaltautomatik bei Stillstand des Autos ausstatten wollen. Da die auf dem Steuergerät vorhandene Funktion zur Regelung der Leerlaufdrehzahl eine solche Funktionalität nicht aufweist, möchte er sie durch eine eigene ersetzen und teilt dies dem Zulieferer mit.

Der Zulieferer speichert daraufhin eine Bypass-Servicefunktion Z in einen freien Speicherbereich des Flashs SP1 und implementiert Aufrufe des Services vor und hinter die zu möglicherweise zu ersetzenden Funktion *engine*_*idle*_*rev*.

Die übergebenen Argumente *id1* und *id2* sind Zeiger auf Positionen einer Funktionsadresstabelle AD für Speicheradressen von Steuergerätefunktionen. Die Service-Funktion Z prüft nach, ob der übergebene Zeiger auf eine Tabellenposition mit einem Eintrag einer Speicheradresse verweist. Ist das der Fall, so erwartet die Service-Funktion an dieser Adresse eine Bypassroutine (bei id1) bzw. eine Überschreibungsroutine (bei id2) und ruft diese auf. Ist der jeweilige Eintrag leer, so bleibt die Service-Funktion Z passiv.

Der Anwender, der die auf dem Flash SP1 gespeicherte Funktion *engine*_*idle*_*rev* durch eine neue Funktion *eir*_*byp* ersetzen möchte, speichert diese neue Funktion nach dem bisherigen Vorgehen im Stand der Technik in einem freien Bereich des Flash-Speichers SP1 und trägt die Adresse von *eir*_*byp* an Position *id1* der Funktionsadresstabelle AD ein. Er speichert außerdem eine Überschreibungsfunktion *eir*_*byp*_*owr* in einem anderen freien Bereich des Flashs SP1 und trägt die Adresse von *eir*_*byp*_*owr* an Position *id2* der Funktionsadresstabelle AD ein.

Die Bypass-Funktion *eir*_*byp* enthält den eigentlichen Programmcode. Sie schreibt aber alle von ihr geschriebenen Werte zunächst in einen Zwischenspeicher VAR, bestehend aus einem Satz eigens definierter globaler Variablen, auf die außer *eir*_*byp* keine andere Funktion zugreift. Nachdem die Originalfunktion *engine*_*idle*_*rev* ordnungsgemäß durchgelaufen ist, überschreibt *eir*_*byp*_*owr* die von *engine_idle_rev* geschriebenen Variablen mit den Werten aus dem von *eir*_*byp* angelegten Zwischenspeicher VAR.

Da die Überschreibungsfunktion *eir*_*byp*_*owr* speziell für die Bypass-Funktion *ei*r_*byp* angelegt wurde, weiß sie, welche Variable aus dem Zwischenspeicher VAR welche Variable des Programmcodes überschreiben muss. Werden nicht eine, sondern mehrere Bypass-Funktionen auf dem Flash SP1 installiert, erhält jede ihre eigene Überschreibungsfunktion. Die Information, welche Variablen die Originalfunktion *engine*_*idle*_*rev* verarbeitet sowie deren Speicheradressen werden der dem Steuergerät beiliegenden a2l-Datei entnommen.

Der zweite Service-Aufruf *Z(id2),* der die Überschreibungsfunktion aufruft, muss erfolgen, nachdem in *engine*_*idle*_*rev* alle Variablen-Schreibzugriffe erfolgt sind, aber bevor eine dieser Variablen im weiteren Verlauf verwendet wird. Andernfalls ist der Programmablauf nicht konsistent. Der Aufruf kann unmittelbar nach der *return-*Anweisung von *engine*_*idle*_*rev* erfolgen, sofern sie mit ihrem *return* keine Werte übergibt. Ansonsten muss der Aufruf innerhalb der Funktion vor der *return*-Anweisung erfolgen.

In dem beschriebenen Szenario laufen sowohl Originalfunktion als auch Bypass-Funktion vollständig durch. In einem anderen Szenario, in dem das Steuergerät ECU zum Beispiel eine zeitkritische Funktion ausübt, könnte die Funktion *engine*_*idle*_*rev* auch vollständig deaktiviert werden. In diesem Szenario könnte die Bypass-Funktion ihre Werte nicht in einen Zwischenspeicher schreiben, sondern die Programmvariablen direkt beschreiben. Der zweite Service-Aufruf würde dann wegfallen, und die Service-Funktion Z könnte als zweites Argument die Adresse von f3 erhalten oder als Argument einen Pointer, der auf eine Tabellenposition verweist, an welcher die Adresse von f3 gespeichert ist. Sie kann auch nach Aufruf der Bypass-Funktion einen Sprung zu f3 ausführen.

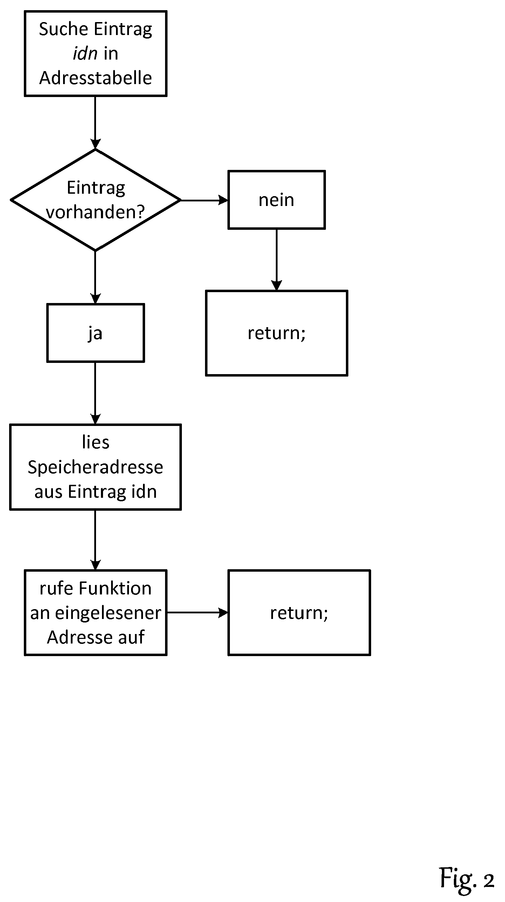

Fig. 2 zeigt als Flussdiagramm die Grundfunktionalität einer Bypass-Service-Funktion nach Stand der Technik. Dem Service wird beim Aufruf ein Argument *idn* übergeben, das eine Position in einer Funktionsadresstabelle AD bezeichnet. Der Service schaut an dieser Position nach und findet dort entweder eine Speicheradresse oder einen leeren Eintrag bzw. einen Wert, der keine gültige Adresse darstellt und per Konvention einen leeren Eintrag bezeichnet.

Ist der Eintrag leer, erfolgt unmittelbar eine *return*-Anweisung, die den Service beendet. Findet er eine Speicheradresse vor, erwartet er an dieser Stelle eine Funktion und führt einen Aufruf dieser Funktion durch. Dass die richtige Funktion sich an genau dieser Adresse befindet, wird durch die verwendete Bypass-Implementierungs-Software sichergestellt.

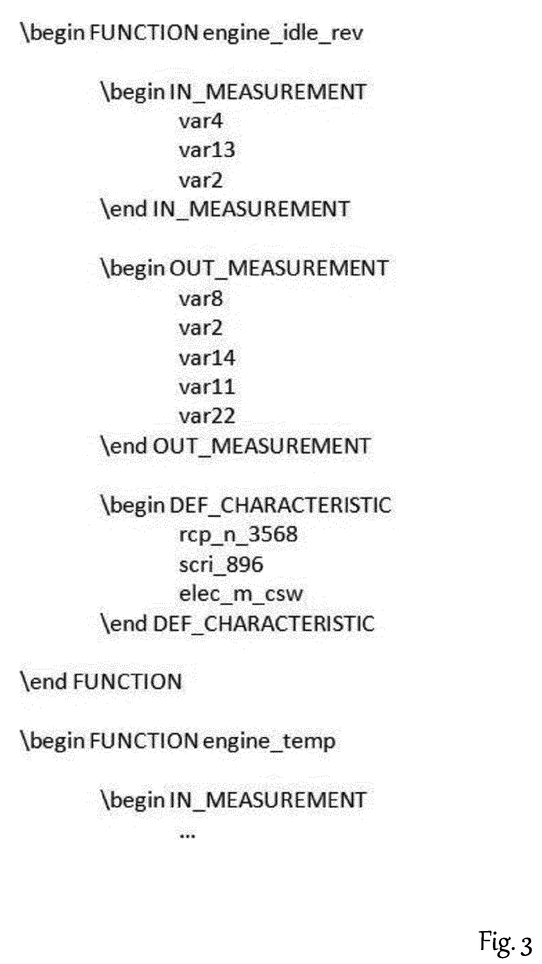

Fig. 3 zeigt einen Ausschnitt aus einer fiktiven a2l-Datei. Sie enthält eine technische Beschreibung der Steuergerätesoftware und ist Teil des Lieferumfangs jedes Entwicklungssteuergeräts. Die Figur 3 zeigt einen Teil des Abschnitts, der die Funktionsbeschreibungen enthält. Ein Programmierer, der eine Bypass-Funktion für die Funktion *engine_idle_rev* schreiben will, kann hier auslesen, dass sie die Variablen *var4, var13* und *var2* einliest, die Variablen *var8, var2, var14, var11,* und *var22* beschreibt und durch die Einstellwerte *rcp_n_3568, scri*_896 und *elec*_*m*_*csw* parametriert ist. In einem anderen Abschnitt der a2l-Datei werden die Speicheradressen der Variablen genannt.

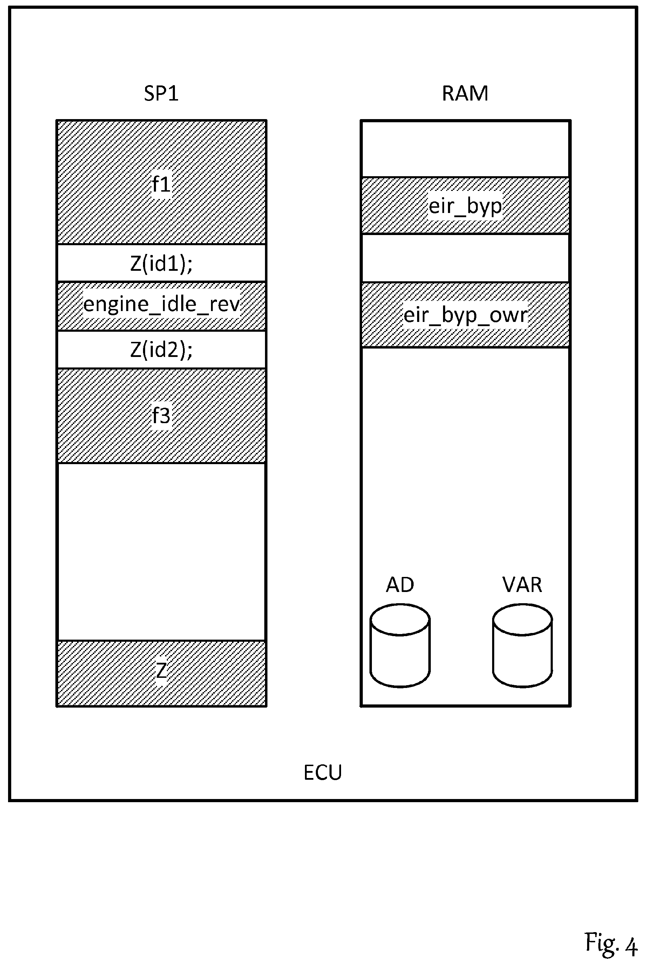

Fig. 4 illustriert das in Fig. 1 gezeigte Bypass-Szenario auf einem erfindungsgemäß konfigurierten Steuergerät. Die gesamte Bypassfunktionalität, also die Bypassroutine *eir*_*byp* und die Überschreibungsroutine *eir*_*byp*_*owr*, sind nicht in den Flash SP1 geladen, sondern in den Arbeitsspeicher RAM.

Der Arbeitsspeicher ist ein flüchtiger Speicher. Sein Inhalt bleibt nach Ausschalten des Steuergerätes also nicht erhalten. Dafür ist er schnell und beliebig oft beschreibbar. Es ist daher erfindungsgemäß möglich, Bypassroutinen nach Belieben auszutauschen oder zu erweitern, ohne dafür das Steuergerät anhalten und neu programmieren zu müssen.

Dafür werden in einer bevorzugten Ausführung zunächst die Einträge *id1* und *id2* in der Funktionsadresstabelle AD gelöscht. Die Service-Funktion Z bleibt daraufhin, beginnend mit ihrem nächsten Aufruf, passiv. Der Steuergerätecode wird planmäßig unter Einbeziehung der Originalfunktion *engine*_*idle*_*rev* abgearbeitet. Die Bypass-routine kann gelöscht und durch eine neue Routine ersetzt werden. Sowie die neue Bypassroutine geladen ist, werden die entsprechenden Adressen an die Positionen in der Funktionsadresstabelle AD geschrieben, auf welche die Argumente *id1* und *id2* zeigen.

Die neue Bypassroutine kann auch ergänzend geladen werden, ohne die alte Bypassroutine zu löschen. Die vorherige Löschung der Tabelleneinträge kann dann unterbleiben. Die Einträge werden einfach überschrieben, wenn der ergänzende Code installiert ist, bevorzugt zu einer Zeit, zu der die vorherige Bypassroutine nicht ausgeführt wird, was festgestellt werden kann, wie es im allgemeinen Teil beschrieben wurde.

Durch die Installation des Codes im Arbeitsspeicher RAM ergeben sich auch keine Probleme mit der Validitätsprüfung, da diese nur den Festspeicher SP1 umfasst. In einer anderen Ausführungsform kann es für alle möglichen Ausführungsformen der Erfindung auch vorgesehen sein, der Service-Funktion durch eine über eine Schnittstelle von außen beschreibbare Kontrollvariable mitzuteilen, ob der Bypass-Code ausgeführt werden soll. Dafür prüft die Service-Funktion den Wert der Kontrollvariablen und springt nur bei Vorliegen einer geprüften Bedingung bzgl. dieses Wertes zu der Adresse, auf die das Argument verweist.

Das erfindungsgemäße Verfahren muss sicherstellen, dass eine bestehende Bypass-routine nicht gelöscht oder überschrieben wird, während sie gerade ausgeführt wird.

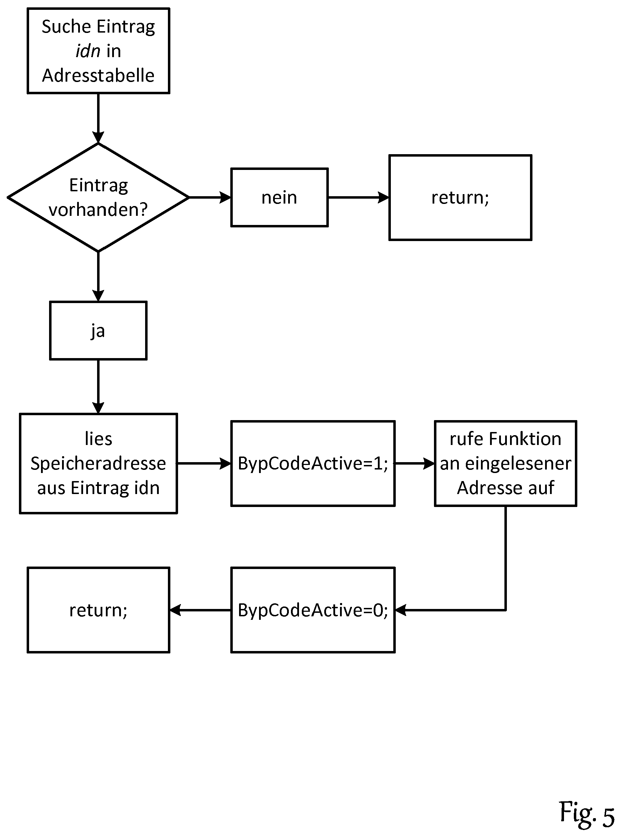

Zu diesem Zweck ist die Service-Funktion Z gemäß Fig. 5 um eine Kontrollfunktion erweitert. Eine Kontrollvariable *BypCodeActive* fungiert als virtueller Schalter bzw. als Statusregister im Sinne der vorherigen allgemeinen Erfindungsbeschreibung. Vor Ausführung der Bypass-Routine wird sie gleich eins gesetzt, nach Beendigung derselben gleich null. Die verwendete Bypass-Implementierungs-Software liest den Wert von *BypCodeActive* über eine Schnittstelle des Steuergeräts ECU aus und ist derart ausgestaltet, dass sie den Zugriff auf die Bypassroutine, also z.B. das Überschreiben, verweigert, wenn *BypCodeActive* gleich eins ist.

Die Servicefunktion kann neben der skizzierten Hauptfunktionalität noch andere Funktionen übernehmen. Beispielsweise kann sie vor dem Ausschalten des Steuergeräts ECU den im Arbeitsspeicher RAM liegenden Code de-registrieren, um sicherzustellen, dass nach dem nächsten Start des Steuergeräts kein korrumpierter Code zur Ausführung gebracht wird.

In einer weiteren Ausführungsform erkennt die Servicefunktion bis spätestens vor dem Ausführungsbegehren einer ersten Bypassroutine nach dem Herunterladen oder Austauschen von Bypassroutinen, dass neue Routinen heruntergeladen, jedoch noch nicht initialisiert wurden, und ruft eine durch einen Eintrag id0 konfigurierte Funktionsadresse auf. Unter der Funktionsadresse id0 befindet sich eine vorzugsweise ebenfalls durch die Bypass-Impementierungs-Software dynamisch heruntergeladene Funktion, die die Initialisierung der durch die Bypassroutine referenzierten Elemente, wie z.B. globaler Variablen, durchführt. Die Servicefunktion stellt somit sicher, dass vor dem ersten Aufruf eines neuen Satzes an Bypassroutinen zunächst die Initialisierungsfunktion ausgeführt wird.

Die zuvor genannte Kontrollfunktion ist nicht in allen Szenarien hinreichend. Beispielsweise könnte es möglich sein, dass eine laufende Bypassroutine durch einen zweiten Prozess mit höherer Priorität unterbrochen wird. Führt dieser zweite Prozess dann ebenfalls eine Bypassroutine aus, so wird er danach BypCodeActive=0 setzen, obwohl der angehaltene Bypass-Code noch nicht beendet ist. In einem solchen Szenario, in dem mehrere Prozesse gleichzeitig Bypassroutinen ausführen können, muss sichergestellt sein, dass in keinem einzigen Prozess eine Bypassroutine aktiv ist.

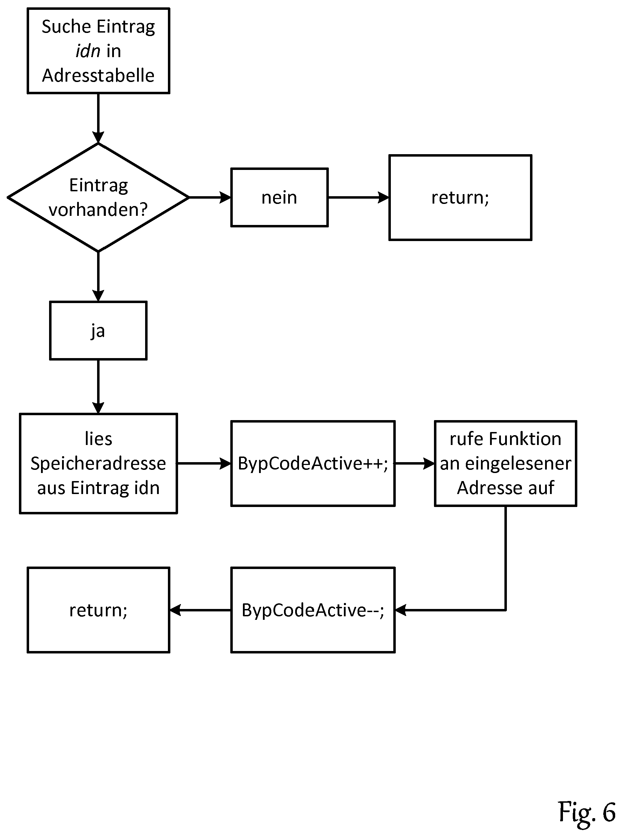

Dies wird durch die in Fig. 6 gezeigte Variante gelöst. *BypCodeActive* ist hier kein binärer Wert, also kein Statusregister, sondern eine ganze Zahl, die vor Ausführung einer Bypassroutine atomar inkrementiert und nach dessen Beendigung atomar dekrementiert wird.

Sie kann theoretisch jeden ganzzahligen Wert größer-gleich Null annehmen und zeigt mit diesem Wert an, wie viele Bypassroutinen aktuell abgearbeitet werden. Zugriff auf eine Bypassroutine zum Zweck der Ersetzung, wird nur dann gestattet, wenn *By-pCodeActive* gleich null ist.

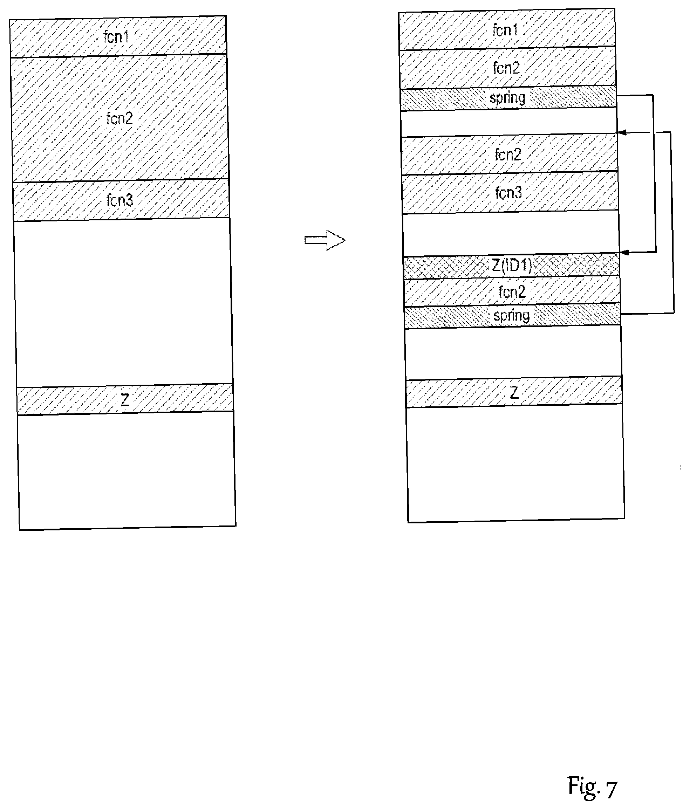

Fig. 7 zeigt ein Beispiel, wie sich Service-Funktions-Aufrufe noch nachträglich in den Maschinencode integrieren lassen, wenn dies nicht seitens des Herstellers / Zulieferers vorbereitet wurde.

Die Figur 7 zeigt auf der linken Seite den Festspeicher eines Steuergeräts. Auf diesem gespeichert ist ein Programm, bestehend aus drei Routinen *fcn1, fcn2* und *fcn3.* Außerdem liegt auf dem Festspeicher eine Bypass-Service-Funktion Z. Diese kann vom Zulieferer oder vom Anwender selbst dort installiert worden sein. Die rechte Seite zeigt den gleichen Festspeicher nach der Platzierung eines Serviceaufrufs in *fcn2.*

Dafür wurde ein Teil des Codes von *fcn2* von der Stelle des gewünschten Service-Aufrufs in einen hinreichend großen freien Speicherbereich des Festspeichers verschoben und der Service-Aufruf davor geschrieben. In den durch die Verschiebung freigewordenen Speicherbereich in *fcn2* wurde ein auf den Service-Aufruf zeigender Sprungbefehl geschrieben. Ein weiterer Sprungbefehl wurde hinter den verschobenen Anteil von *fcn2* geschrieben und führt in den vorgesehenen Programmablauf zurück.

Die Bypass-Service-Funktion Z kann seitens des Zulieferers des Steuergeräts bereits vorinstalliert sein. Der Anwender ist mittels des geschilderten Verfahrens in der Lage, an jeder gewünschten Stelle Aufrufe der Bypass-Service-Funktion in der Software zu implementieren. Er benötigt dafür keinen Zugriff auf den Quellcode der Software und ist nicht auf die Mitarbeit des Zulieferers angewiesen.

Im Allgemeinen muss der nachimplementierte, die Service-Funktion Z aufrufende Code dem Steuergerät angepasst sein. Die genaue Art und Weise, Programmfunktionen Argumente zu übergeben, kann, abhängig beispielsweise von der Prozessorarchitektur, der verwendeten Programmiersprache oder dem verwendeten Compiler, variieren. Die zur Durchführung des erfindungsgemäßen Verfahrens verwendete Bypass-Implementierungs-Software muss deshalb in der Lage sein, Informationen über das jeweilige Steuergerät einzulesen, beispielsweise über eine spezielle Beschreibungsdatei, und den neu implementierten Funktionsaufruf entsprechend anzupassen.

In einer Ausführungsform des Verfahrens überprüft die ausführende Software den zu verschiebenden Code vor der Verschiebung auf Adressangaben und passt sie bei Bedarf vor oder nach der Verschiebung an die Verschiebung an. Der Anpassung bedürfen insbesondere relative Adressangaben, die auf Adressen außerhalb des zu verschiebenden Codes verweisen, sowie absolute Adressangaben, die auf Adressen innerhalb des zu verschiebenden Codes verweisen. Enthält er zum Beispiel einen Verweis auf einen Speicherbefehl an der Stelle "aktuelle Position - 20" und wird dieser Speicherbefehl nicht mitverschoben, dann darf die Position dieses Codes nicht verändert werden, ohne den Code selbst entsprechend zu modifizieren. Das Programm würde danach nicht mehr ordnungsgemäß funktionieren. Die Software wird die Ausführung der Verschiebung in diesem Fall verweigern oder in anderen Ausführungsformen nach alternativen, verschiebbaren Codesequenzen in der gegebenen Region suchen. In einer anderen Ausführungsform werden relative Adressangaben in dem zu verschiebenden Codeanteil entsprechend angepasst oder durch neue Codes oder Codesequenzen mit gleicher Funktionalität ersetzt.

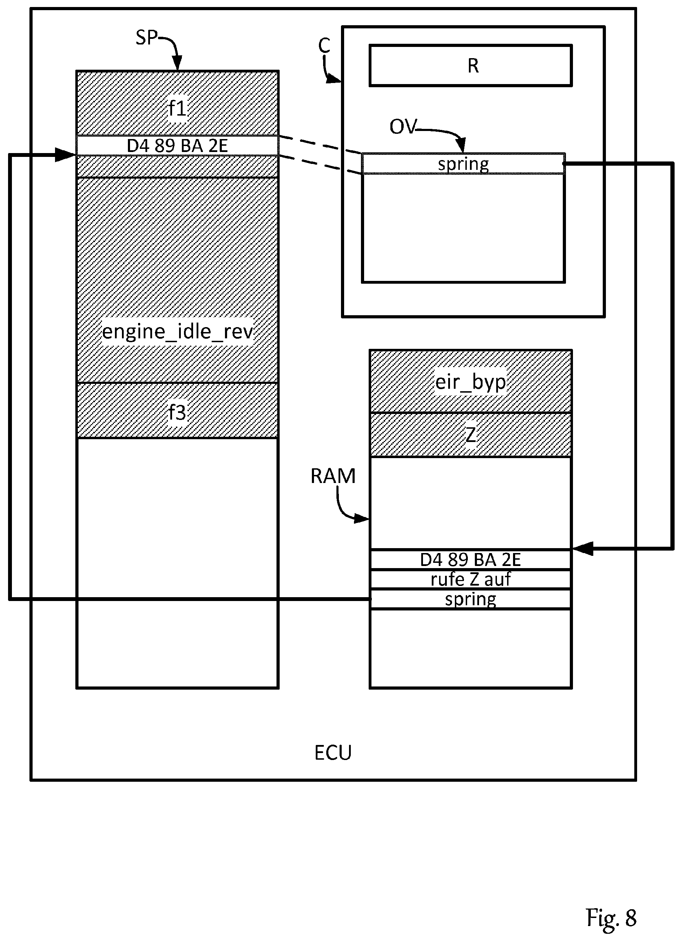

Alternativ ist es möglich, durch Nutzung von Funktionalitäten, die Entwicklungssteuergeräte zur Verfügung stellen, die benötigten Service-Funktions-Aufrufe vorübergehend in den Programmcode einzubinden, ohne den auf dem Flash liegenden Maschinencode zu manipulieren. Dieses Verfahren skizziert Fig. 8.

Beispiele wären die Nutzung des Overlay-Speichers OV, einer in vielen Entwicklungssteuergeräten vorhandenen Vorrichtung zur vorübergehenden Überlagerung von Speicherinhalten durch andere Inhalte, oder der *Memory Management Unit* (MMU), die eine Neuzuteilung physikalischer Speicheradressen an logische Speicheradressen ermöglicht. Sie kann im Sinne dieser Erfindung analog zum Overlay-Speicher verwendet werden. Wie dieser ist sie Teil der Prozessorfunktionalität vieler Entwicklungssteuergeräte.

Diese Ausführung des Verfahrens sieht vor, eine hinreichend lange Codesequenz des Maschinencodes mit einem Sprungbefehl zu überlagern, die auf eine Adresse im Arbeitsspeicher RAM verweist. Diese Adresse markiert den Beginn einer Codese-quenz, die eine Rekonstruktion des überlagerten Codes und einen Aufruf der Service-Funktion enthält, wobei der Aufruf der Service-Funktion vor oder hinter dem rekonstruierten Code erfolgen kann. Die Codesequenz endet mit einem Sprungbefehl, der auf den der überlagerten Codesequenz unmittelbar folgenden Maschinenbefehl folgt. Die Service-Funktion wird, wie die Bypassroutine, in den Arbeitsspeicher RAM geschrieben.

Beinhaltet der Steuergerätecode eine zyklische Validitätsprüfung, wird bei diesen Methoden allerdings die Prüfsumme des Codes abgeändert.

Außerdem möglich ist die Nutzung von Watchpoints. Dabei handelt es sich um eine Funktionalität, die viele Entwicklungssteuergeräte zur Verfügung stellen (allerdings in begrenzter Anzahl). Anders als Breakpoints halten Watchpoints in bestimmten Entwicklungssteuergerätemodellen das Steuergerät nicht einfach an der gewünschten Stelle an, sondern führen Code aus, der in einen dafür vorgesehenen Speicher geschrieben wird. Dadurch ist es dem Anwender beispielsweise möglich, das Anhalten an eine Bedingung zu knüpfen (z.B.: if (x > 4) break;). Dieser Monitorcode kann auch aus einem Service-Aufruf bestehen.

## Patentansprüche

1. Verfahren zur Änderung der Software im Speicher eines elektronischen Steuergerätes (ECU), wobei der Speicher zumindest einen Festspeicher (SP1) umfasst mit darin gespeicherten und zumindest einen Teil der Software bildenden mehreren ursprünglichen Programmroutinen, die durch wenigstens einen Prozessor des Steuergerätes abgearbeitet werden; und der weiterhin zumindest einen Arbeitsspeicher (RAM) zur Speicherung flüchtiger Daten aufweist, wobei auf dem Steuergerät eine Bypassroutine abgespeichert wird, die zusätzlich zu oder anstatt wenigstens einer ursprünglichen Programmroutine abgearbeitet wird, was dadurch erfolgt, dass im Ablauf der Abarbeitung von Programmschritten durch den Prozessor zumindest vor dem Ende der ursprünglichen Programmroutine der Aufruf einer Service-Funktion (Z) erfolgt, welcher optional die Speicheradresse einer Bypassroutine übergeben wird, was dadurch erfolgt, dass der Service-Funktion (Z) ein Zeiger auf eine Position in einer gespeicherten Tabelle (AD) übergeben wird und bei einem bestehenden Eintrag in der Tabelle (AD) an dieser Position die Bypassroutine an der der durch den Eintrag gebildeten Adresse aufgerufen wird und bei einem nicht bestehenden oder als ungültig markierten Eintrag die Service-Funktion (Z) ohne Aufruf der Bypassroutine beendet wird, wobei die Bypassroutine über eine Schnittstelle des Steuergerätes mittels eines an der Schnittstelle angeschlossenen Rechners in einen außerhalb des Festspeichers (SP1) liegenden Bereich des Speichers, insbesondere in den flüchtigen Arbeitsspeicher (RAM), übertragen wird und der Service-Funktion die Adresse übergeben wird, an welcher die Bypassroutine beginnt, **dadurch gekennzeichnet, dass** in einem ersten Verfahrensschritt das Aufrufen der Bypassroutine durch die Service-Funktion deaktiviert wird, indem ein bestehender Eintrag an der durch den Zeiger bestimmten Position der Tabelle (AD) gelöscht oder als ungültig markiert wird, in einem zweiten Verfahrensschritt in einem Zeitraum, in dem der Prozessor die Bypassroutine nicht abarbeitet und die Software mit der ursprünglichen Programmroutine durchläuft, die Bypassroutine durch eine neue Bypassroutine ersetzt wird und in einem dritten Verfahrensschritt das Aufrufen der neuen Bypassroutine durch die Service-Funktion aktiviert wird, wobei der erste Verfahrensschritt, der zweite Verfahrensschritt und der dritte Verfahrensschritt zur Laufzeit der Abarbeitung der Software durch den Prozessor durchgeführt werden, und wobei der Bypassroutine entweder ein Statusregister zugeordnet ist, das bei Ausführung der Bypassroutine durch die Service-Funktion auf einen ersten Wert gesetzt wird und ansonsten durch die Service-Funktion auf einen zweiten Wert gesetzt oder gelöscht wird, wobei der zweite Verfahrensschritt nur durchgeführt wird, wenn der Eintrag an der Position in der Tabelle (AD) gelöscht oder als ungültig markiert und gleichzeitig das Statusregister der zu ersetzenden Bypassroutine auf den zweiten Wert gesetzt oder gelöscht ist, oder mittels eines Zählers die Anzahl der Prozesse, die zu einem gegebenen Zeitpunkt die Bypassroutine abarbeiten, überwacht wird, wobei bei jedem Aufruf der Bypass-Routine der Zähler durch die Service-Funktion inkrementiert wird und bei Beendigung der Bypass-Routine der Zähler dekrementiert wird, und der zweite Verfahrensschritt nur durchgeführt wird, wenn der Eintrag an der Position in der Tabelle (AD) gelöscht oder als ungültig markiert ist und gleichzeitig der Zähler sich auf null befindet.

2. Verfahren nach Anspruch 1, **dadurch gekennzeichnet, dass** durch eine Software und/oder Hardware der Tabelleneintrag gelöscht, der Zähler / das Register abgefragt wird und in Abhängigkeit des Zählerstandes oder Registerstandes ein Neueintrag in die Tabelle erfolgt.

3. Verfahren nach einem der vorherigen Ansprüche, **dadurch gekennzeichnet, dass** zur Implementation eines ursprünglich im Festspeicher (SP1) zu einer Programmroutine nicht vorhandenen Service-Funktionsaufrufes ein Overlay-Speicher des Steuergerätes genutzt wird, von dem zumindest eine Speicheradresse mittels einer Zuordnungsinformation einer Speicheradresse eines Programmroutinenbefehls der im Festspeicher zu ersetzenden Programmroutine zugeordnet wird, sodass der Prozessor statt des Programmroutinenbefehls an der Adresse im Festspeicher den Befehl an der zugeordneten Adresse des Overlay-Speichers abarbeitet und an der zugeordneten Adresse im Overlay-Speicher ein Sprungbefehl gespeichert wird, der den Prozessor veranlasst, die Programmabarbeitung ab einer Adresse im flüchtigen oder nicht-flüchtigen Arbeitsspeicher (RAM) fortzusetzen, die durch den Sprungbefehl identifiziert wird, wobei in einem Speicherbereich des Arbeitsspeichers ab dieser Adresse wenigstens ein Service-Funktionsaufruf, eine Rekonstruktion des Programmroutinenbefehls und ein Sprungbefehl, der in die ursprüngliche Programmroutine zurückführt, gespeichert sind.

## Claims

1. A method for modifying the software in the memory of an electronic control unit (ECU) the memory comprising at least one permanent memory (SP1) having a plurality of original program routines saved therein and forming at least part of the software and being processed by at least one processor of the control unit, and further comprising at least one working memory (RAM) for storing volatile data, a bypass routine being saved in the control unit and being processed in addition to or instead of at least one original program routine, taking place in that as the program steps are processed by the processor a service function (Z) is called at least before the end of the original program routine, the memory address of a bypass routine optionally being transmitted to said function, taking place in that a pointer to a position in a saved table (AD) is transferred to the service function (Z) and that the bypass routine is called by the address formed by the entry if an entry is present in the table (AD) at said position, and the service function (Z) is terminated without calling the bypass routine if no entry or an entry marked as invalid is present, the bypass routine being transmitted via an interface of the control unit by means of a computer connected to the interface into a region of the memory located outside of the permanent memory (SP1), particularly into the working memory (RAM), and the address at which the bypass routine begins being transmitted to the service function, **characterized in that** in a first method step, the calling of the bypass routine is deactivated by the service function, **in that** a present entry at the position of the table (AD) determined by the pointer is deleted or marked as invalid, in a second method step, the bypass routine is replaced with a new bypass routine in a period of time in which the processor is not processing the bypass routine and the software is running with the original program routine, and in a third method step, the calling of the new bypass routine is activated by the service function, wherein the first method step, the second method step, and the third method step are performed as the software is being processed by the processor, and wherein the bypass routine either is associated with a status register set to a first value by the service function while the bypass routine is being executed and otherwise set to a second value by the service function, or is deleted, wherein the second method step is performed only if the entry at the position in the table (AD) is deleted or marked as invalid and simultaneously the status register of the first bypass routine to be replaced is set to the second value or deleted, or a counter is used for monitoring the number of processes processing the bypass routine at a given time, wherein for each call of the bypass routine the counter is incremented by the service function and when the bypass routine is terminated the counter is decremented, and the second method step is performed only if the entry at the position in the table (AD) is deleted or marked as invalid and the counter is simultaneously at zero.

2. The method according to claim 1, **characterized in that**, by means of a software and/or a hardware, the table entry is deleted, the counter or register is queried, and depending on the counter value or register value a new entry is made in the table.

3. The method according to any one of the preceding claims, **characterized in that** an overlay memory of the control unit is used for implementing a service function call not present in the permanent memory (SP1) of a program routine, by which at least one memory address is associated by means of an association information with a memory address of a program routine command of the program routine to be replaced in the permanent memory, so that the processor processes the command at the associated address of the overlay memory instead of the program routine command at the address in the permanent memory and a jump command is saved at the associated address in the overlay memory and induces the processor to continue processing the program starting from an address in the volatile or non-volatile working memory (RAM) identified by the jump command, wherein at least one service function call, a reconstruction of the program routine command, and a jump command leading back into the original program routine are saved in a memory area of the working memory starting from said address.

## Revendications

1. Procédé pour modifier le logiciel dans la mémoire d'un appareil de commande électronique (ECU), sachant que la mémoire comprend au moins une mémoire morte (SP1) avec plusieurs routines de programme initiales qui y sont mémorisées et qui constituent au moins une partie du logiciel, qui sont exécutées par au moins un processeur de l'appareil de commande ; et qui présente en outre au moins une mémoire vive (RAM) pour la mémorisation de données volatiles, sachant qu'une routine de dérivation est mémorisée sur l'appareil de commande, laquelle est exécutée en plus ou au lieu d'au moins une routine de programme initiale, ce qui est réalisé en ce sens qu'en cours du traitement de pas de logiciel par le processeur, une fonction de service (Z) est appelée au moins avant la fin de la routine de programme initiale, à laquelle fonction de service (Z) l'adresse en mémoire d'une routine de dérivation est facultativement délivrée, ce qui est réalisé en ce sens qu'un pointeur vers une position dans une table mémorisée (AD) est délivré à la fonction de service (Z) et en cas d'existence d'une entrée dans la table (AD) à cette position, la routine de dérivation est appelée à l'adresse constituée par l'entrée et en cas d'inexistence d'une entrée ou d'une entrée marquée non-valable, la fonction de service (Z) se termine sans appel de la routine de dérivation, sachant que la routine de dérivation est transmise dans une zone de mémoire située hors de la mémoire morte (SP1), en particulier dans la mémoire vive volatile (RAM), via une interface de l'appareil de commande à l'aide d'un calculateur raccordé à l'interface, et l'adresse à laquelle commence la routine de dérivation est délivrée à la fonction de service, **caractérisé en ce que** dans une première étape du procédé, l'appel de la routine de dérivation par la fonction de service est désactivé en ce sens qu'une entrée existant à la position déterminée par le pointeur dans la table (AD) est supprimé ou marquée non-valable, dans une seconde étape du procédé, dans une période de temps dans laquelle le processeur n'exécute pas la routine de dérivation et le logiciel court avec la routine de programme initiale, la routine de dérivation est remplacée par une nouvelle routine de dérivation et, dans une troisième étape du procédé, l'appel de la nouvelle routine de dérivation par la fonction de service est activé, sachant que la première étape du procédé, la seconde étape du procédé et la troisième étape du procédé sont exécutés pendant la durée d'exécution du logiciel par le processeur, et sachant qu'il est attribué à la routine de dérivation soit un registre d'état, qui est réglé à une première valeur lors de l'exécution de la routine de dérivation par la fonction de service et qui, sinon, est réglé à une seconde valeur par la fonction de service ou supprimé, sachant que la seconde étape du procédé n'est exécuté que si l'entrée à la position dans la table (AD) est supprimée ou marquée non-valable et, dans le même temps, le registre d'état de la routine de dérivation devant être remplacée est réglé à la seconde valeur ou supprimé, ou le nombre de processus exécutant la routine de dérivation à un moment déterminé est surveillé à l'aide d'un compteur, sachant qu'à chaque appel de la routine de dérivation, le compteur est incrémenté par la fonction de service et le compteur est décrémenté à la fin de la routine de dérivation, et la seconde étape du procédé n'est exécutée que si l'entrée à la position dans la table (AD) est supprimée ou marquée non-valable et, dans le même temps, le compteur est à zéro.

2. Procédé selon la revendication 1, **caractérisé en ce qu'**un logiciel et/ou un matériel est utilisé pour supprimer l'entrée de la table, interroger le compteur/le registre et, selon le compteur ou l'état du registre, créer une nouvelle entrée dans la table.

3. Procédé selon l'une des revendications précédentes, **caractérisé en ce que** pour l'implémentation d'un appel de fonction de service inexistant initialement dans la mémoire morte (SP1) pour une routine de programme, il est utilisé une mémoire de recouvrement de l'appareil de commande, par laquelle au moins une adresse en mémoire est allouée à l'aide d'une information d'allocation d'une adresse en mémoire d'une instruction de routine de programme de la routine de programme devant être remplacée dans la mémoire morte, si bien que le processeur, au lieu de l'instruction de routine de programme à l'adresse dans la mémoire morte, exécute l'instruction à l'adresse allouée dans la mémoire de recouvrement et une instruction de saut est mémorisée à l'adresse allouée dans la mémoire de recouvrement, laquelle instruction de saut amène le processeur à continuer l'exécution du logiciel à partir d'une adresse dans la mémoire vive (RAM) volatile ou non-volatile qui est identifiée par l'instruction de saut, sachant qu'au moins un appel de la fonction de service, une reconstruction de l'instruction de routine de programme et une instruction de saut reconduisant à la routine de programme initiale sont mémorisés dans une zone de mémoire de la mémoire vive, à partir de cette adresse.
